## Europäisches Patentamt

## European Patent Office

## Office européen des brevets

(11) Veröffentlichungsnummer: **0 499 894 A2**

# EUROPÄISCHE PATENTANMELDUNG

(21) Anmeldenummer: **92101985.7**

(51) Int. Cl.5: **B32B 1/08**

(22) Anmeldetag: **06.02.92**

(30) Priorität: **09.02.91 DE 4103980**

(43) Veröffentlichungstag der Anmeldung:
**26.08.92 Patentblatt 92/35**

(84) Benannte Vertragsstaaten:
**BE DE DK GB IT NL SE**

(71) Anmelder: **SAERBECK-TEXTIL WAGENER GmbH & CO. KG.**
**Industriestrasse 11**
**W-4401 Saerbeck(DE)**

(72) Erfinder: **Wagener, Gert**
**Neubrückenstrasse 43**
**W-4407 Emsdetten(DE)**

(74) Vertreter: **Habbel, Hans-Georg, Dipl.-Ing.**
**Postfach 3429 Am Kanonengraben 11**
**W-4400 Münster(DE)**

(54) **Verfahren zur Herstellung eines Schlauches zur Innenauskleidung von Rohrleitungen.**

(57) Die Erfindung bezieht sich auf ein Verfahren zur Herstellung eines Schlauches zur Innenauskleidung von Kanalrohren oder Rohrleitungen zur Führung von Flüssigkeiten, wobei vorgeschlagen wird, daß durch die Art der Verbindung der Kombinationsbahnränder zusätzliche Dehnungen in diesem Bereich möglich sind, so daß dadurch Anpassungen an Durchmesserunterschiede des auszukleidenden Abwasserkanalrohres erreichbar sind. Außerdem kann die Glasfilzmatte Microballoons dispergiert enthalten und es können elektrische Heizdrähte in den Schlauch eingearbeitet sein, um derart die Aushärtung bzw. Erwärmung zu erleichtern.

EP 0 499 894 A2

Die Erfindung bezieht sich auf ein Verfahren zur Herstellung eines Schlauches zur Innenauskleidung von Rohrleitungen. Die Rohrleitungen können z. B. Abwasser oder auch Trinkwasser führen.

In der DE-38 19 657 C1 wird ein solches Verfahren beschrieben, bei welchem auf eine oder zwischen aus Glasfaserfäden gebildete Gewebebahn oder Gewirkebahn eine aus Glasfasern gebildete Filzmatte gelegt wird. Diese Filzmatte wird dann mit der oder den Gewebe- oder Gewirkebahnen, vorzugsweise in Nähwirktechnik, verbunden und dann wird aus dieser Kombinationsbahn ein Schlauch geformt. Die Bahnränder können dabei im Randbereich geschäftet sein. Der Schlauch wird dann durch Verbinden der Kombinationsbahnränder gebildet und die Verbindung der Bahnränder kann durch Vernähen erfolgen. Vorzugsweise sind die Gewirkebahnen in Nähwirktechnik hergestellt.

Der so gebildete Schlauch wird dann mit Kunstharz getränkt und in das Abwasserkanalrohr eingezogen, dicht an die Abwasserkanalrohrrinnenwand angelegt und dann ausgehärtet. Anpassungen an örtlich vorhandene, z. B. durch Abwaschungen auftretende Innendurchmesserunterschiede des Abwasserkanalrohres erscheinen nur schwer möglich.

Die Erfindung geht von dem gattungsbildenden Verfahren zur Herstellung eines Schlauches aus, und ihr liegt die Aufgabe zugrunde, diese bekannte Verfahrensweise zu verbessern bzw. zu ergänzen.

Diese der Erfindung zugrundeliegende Aufgabe wird durch die Lehre des Hauptanspruches gelöst.

Mit anderen Worten ausgedrückt wird vorgeschlagen, daß die Verbindung der Matte im Bereich der Bahnränder zur Bildung des Schlauches zwar vernäht, die Nähte aber sehr locker gehalten sind, so daß hier Bewegungen der Ränder der Kombinationsbahn gegeneinander möglich sind. Hierdurch sind zusätzliche Angleichungen an unterschiedliche Abwasserkanalrohrdurchmesser möglich.

In vielen Abwasserkanalrohren werden Abwässer geführt, die gegenüber dem umgebenden Erdbereich eine andere Temperatur aufweisen, insbesondere häufig wesentlich wärmer sind. Dies führt zu Schädigungen des umgebenden Erdbereiches und der in diesem Erdbereich wachsenden Flora.

Es muß also ein Bestreben sein, gleichzeitig bei einer Abwasserkanalrohrsanierung auch eine Isolationsschicht einzubringen, durch die diese Umweltbelastung vermieden wird.

Gemäß einem weiteren wesentlichen Merkmal der Erfindung wird vorgeschlagen, daß diese Wärmeisolierung eines zu sanierenden Kanalrohres dadurch erreicht wird, daß die Glasfilzmatte bereits geschäumte oder in einem späteren Arbeitsgang aufzuschäumende Microballoons eindispergiert enthält. Diese Microballoonschicht besteht aus einer Vielzahl kleiner gasgefüllter Kügelchen und stellt eine ausgezeichnete Wärmeisolierung dar.

Außerdem trägt die durch die Verwendung von Microballoons erzeugte Isolationsschicht zur wesentlichen Reduzierung des Verbrauchs an Kunstharz bei, wodurch gleichzeitig das spezifische Gewicht des Laminates reduziert wird.

Um die aufwendige Aushärtung des Kunstharzes des in das Abwasserkanalrohr eingebrachten Schlauches durch UV-Bestrahlung oder Heißwasser, Dampf od. dgl. zu vermeiden bzw. um den Thermoplasten im Schlauch zu erhitzen und in den plastischen Zustand zu überführen, wird gemäß einem weiteren Merkmal der Erfindung vorgeschlagen, daß elektrische Heizdrähte in die Glasfilzmatte und/oder die Gewebe- oder Gewirkebahnen eingearbeitet sind, so daß durch Anschluß dieser Drähte an eine Stromquelle das Aushärten und Erwärmen in einfachster Weise erreichbar ist.

Zusammenfassend ist also festzustellen, daß durch die erfindungsgemäße Arbeitsweise eine Verbesserung des Verfahrens zur Herstellung eines Schlauches erreicht wird, der zur Innenauskleidung von Abwasserkanalrohren geeignet ist. Auch durch die neuen Vorschläge wird die notwendige statische Festigkeit beibehalten, gleichzeitig aber zusätzliche Vorteile erreicht, die den Anwendungsbereich des Auskleidungsschlauches erweitern bzw. die Anwendung verbessern.

## Patentansprüche

1. Verfahren zur Herstellung eines Schlauches zur Innenauskleidung von Rohrleitungen, wobei der Schlauch aus einer oder mehreren aus Glasfaserfäden gebildeten Gewebe- oder Gewirkebahnen besteht und auf die Gewebe- oder Gewirkebahnen bzw. zwischen die Gewebe- oder Gewirkebahnen eine Glasfilzmatte gelegt wird und die Bahn bzw. Bahnen mit der Matte verbunden werden, dadurch gekennzeichnet, daß die Verbindungsnaht im Bereich der Bahnränder locker gehalten ist, um derart zusätzliche Dehnungen im Bereich der Bahnränder beim Anlegen des Schlauches dicht an die Rohrinnenwand und damit Durchmesseranpassungen zu ermöglichen.

2. Verfahren nach Anspruch 1, dadurch gekennzeichnet, daß die Glasfilzmatte bereits geschäumte oder in einem späteren Arbeitsgang aufzuschäumende Microballoons eindispergiert enthält.

3. Verfahren nach Anspruch 1 oder 2, dadurch gekennzeichnet, daß elektrische Heizdrähte in eine Komplexbahn aus Glasfasermaterial oder in eine Fasermischung aus Glasfasermaterial mit Thermoplast und/oder die Gewebe- oder

Gewirkebahnen eingearbeitet sind.